# EUROPEAN PATENT APPLICATION

(11) **EP 4 815 316 A1**
(43) Date of publication of application: **30.09.2026**
(21) Application number: 26160824.4
(22) Date of filing: 26.02.2026
(51) Int. Cl.: H04B 1/04, H04B 3/14

(54) **EQUALIZER CIRCUITS AND METHODS FOR TRANSMITTING DATA USING THREE-LEVEL SIGNALING**

(30) Priority: 25.03.2025 US 202519089967
(71) Applicant: Altera Corporation, San Jose, CA 95134 (US)
(72) Inventor: Leong Goh, Seh, San Jose, 95134 (US); Navaratnam, Navindra, San Jose, 95134 (US); Bong, Pai Ho, San Jose, 95134 (US); Au, Ting Ting, San Jose, 95134 (US)
(74) Representative: Hermann, Felix

(57) **Abstract**

An integrated circuit includes a delay controller circuit that generates delay signals based on a current data bit, an adjustable delay circuit that delays the current data bit, and a driver circuit that drives the current data bit outside the integrated circuit. The driver circuit transitions the current data bit at a first voltage to a second voltage over a first delay provided by the adjustable delay circuit based on the delay signals. The driver circuit transitions the current data bit at the second voltage to a third voltage over a second delay provided by the adjustable delay circuit based on the delay signals. The second voltage is less than the first voltage, and the second voltage is greater than the third voltage.

## Description

### BACKGROUND

Configurable integrated circuits (ICs) can be configured by users to implement desired custom logic functions. In a typical scenario, a logic designer uses computer-aided design (CAD) tools to design a custom circuit design. When the design process is complete, the computer-aided design tools generate an image containing configuration data bits. The configuration data bits are then loaded into configuration memory elements that configure configurable logic circuits in the integrated circuit to perform the functions of the custom circuit design.

### BRIEF DESCRIPTION OF DRAWINGS

Figure 1 is a diagram that illustrates an example of a circuit system that includes three equalizer circuits, three driver circuits, and three receiver circuits.
Figure 2 is a timing eye diagram that illustrates examples of data signals generated by standard transmitter circuits that transmit data using three-level signaling.
Figure 3 is a diagram that illustrates an example of an equalizer circuit in an integrated circuit that transmits data using three-level signaling.
Figure 4 is a timing eye diagram that illustrates examples of data signals generated by the transmitter circuit of Figure 1 having three of the equalizer circuits shown in Figure 3.
Figure 5 is a diagram that illustrates an example of a configurable logic integrated circuit (IC).
Figure 6A is a block diagram of a system that can be used to implement a circuit design to be programmed into a programmable logic device using design software.
Figure 6B is a diagram that depicts an example of a programmable logic device that includes three fabric die and two base die that are connected to one another via microbumps.
Figure 7 is a block diagram illustrating a computing system configured to implement one or more aspects of the embodiments disclosed herein.

### DETAILED DESCRIPTION

Some types of logic circuit systems transmit data using three-level signaling with three-valued logic signals. Each of the three-valued logic signals used in three-level signaling includes three truth values that indicate a first value, a second value, and a third value. Three-level signaling can, for example, be used to transmit data between devices (e.g., having integrated circuits).

Three-valued logic signals generate three crossing points in the transmitted data. The three crossing points in the transmitted data typically have unequal transition voltage levels that can generate data dependent time jitter (TDDJ). TDDJ is undesirable, because TDDJ causes timing errors that are dependent on the data pattern in the transmitted data.

According to some examples disclosed herein, an equalizer circuit and a driver circuit are provided for transmitting three-valued logic signals between devices using three-level signaling. The equalizer circuit includes a serializer circuit that serializes data, a delay controller circuit that includes a look-up table circuit that generates delay control information, an adjustable delay circuit that delays the serialized data to generate delayed data based on the delay control information, and a driver circuit that drives the delayed data as a three-valued logic signal through a transmission line to a receiver circuit.

The equalizer circuit equalizes data dependent time jitter for three-level signaling in a transmitter circuit, thus eliminating the majority of data dependent jitter error caused by the three-level signaling in the transmitter circuit. The equalizer circuit also recovers the data eye margin of data transmitted through an interconnect channel, while reducing any further jitter amplification through the interconnect channel. The equalizer circuit also reduces data dependent time jitter in the receiver circuit that receives the transmitted data, while simplifying the clock recovery circuit in the receiver circuit.

One or more specific examples are described below. In an effort to provide a concise description of these examples, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

Throughout the specification, and in the claims, the terms "connected" and "connection" mean a direct electrical connection between the circuits that are connected, without any intermediary devices. The terms "coupled" and "coupling" mean either a direct electrical connection between circuits or an indirect electrical connection through one or more passive or active intermediary devices that allows the transfer of information between circuits. The term "circuit" may mean one or more passive and/or active electrical components that are arranged to cooperate with one another to provide a desired function.

This disclosure discusses integrated circuit devices, including configurable (programmable) integrated circuits, such as field programmable gate arrays (FPGAs) and programmable logic devices. As discussed herein, an integrated circuit (IC) can include hard logic and/or soft logic. The circuits in an integrated circuit device (e.g., in a configurable IC) that are configurable by an end user are referred to as "soft logic." "Hard logic" generally refers to circuits in an integrated circuit device that have substantially less configurable features than soft logic or no configurable features.

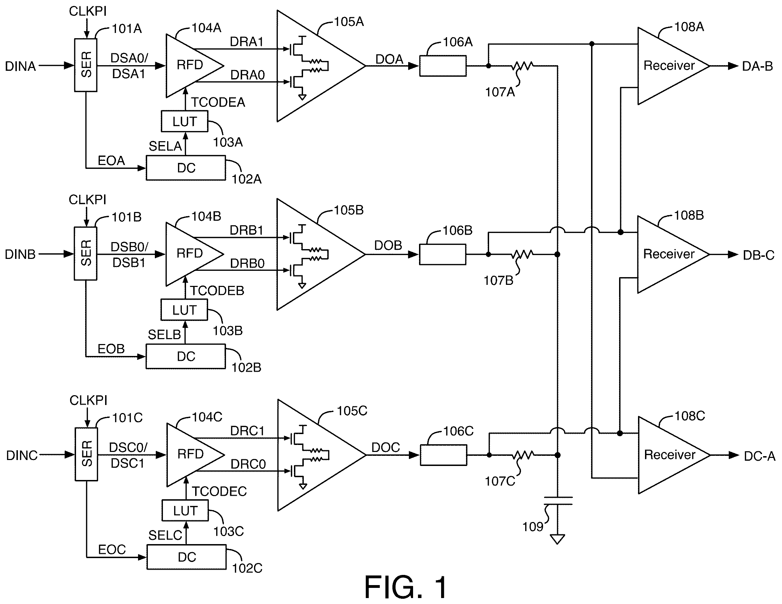

Figure 1 is a diagram that illustrates an example of a circuit system that includes three equalizer circuits, three driver circuits 105A-105C, and three receiver circuits 108A-108C. The three equalizer circuits and the three driver circuits 105A-105C shown in Figure 1 are part of a transmitter circuit. The equalizer circuits and the driver circuits 105A-105C in Figure 1 are in a single integrated circuit (IC) (i.e., a single IC die). The integrated circuit (IC) can be any type of integrated circuit, such as a configurable IC (e.g., a field programmable gate array (FPGA) or programmable logic device (PLD)), a microprocessor IC, a graphics processing unit IC, a memory IC, an application specific IC, a transceiver IC, etc.

The transmitter circuit of Figure 1 includes the three driver circuits 105A, 105B, and 105C and three equalizer circuits. The first equalizer circuit includes a first serializer circuit 101A, a first delay control logic (DC) circuit 102A, a first lookup-table (LUT) circuit 103A, and a first rise-fall detector (RFD) circuit 104A. The second equalizer circuit includes a second serializer circuit 101B, a second delay control logic (DC) circuit 102B, a second lookup-table (LUT) circuit 103B, and a second rise-fall detector (RFD) circuit 104B. The third equalizer circuit includes a third serializer circuit 101C, a third delay control logic (DC) circuit 102C, a third lookup-table (LUT) circuit 103C, and a third rise-fall detector (RFD) circuit 104C. FIG. 1 also shows three transmission lines 106A-106C, three resistors 107A-107C, three receiver circuits 108A-108C, and a capacitor 109. The receiver circuits 108A-108C are in a second integrated circuit (IC) that receives input data.

The Mobile Industry Processor Interface (MIPI) C-PHY is an example of a specification that provides for three-level signaling with three-valued logic signals in data transmission. C-PHY provides high throughput performance over bandwidth limited channels for connecting to peripherals, including displays and cameras. The C-PHY specification is based on 3-phase symbol encoding technology delivering multiple bits per symbol over a group of three conductors (i.e., wires) referred to as a lane (e.g., targeting 2.5 giga-symbols per second). The individual conductors in the group of three conductors are referred to as A, B, and C.

According to the MIPI C-PHY specification, two of the three conductors in a three-conductor lane are driven to opposite signal levels, the third conductor is terminated to a mid-level (i.e., at either one end or both ends), and the voltages at which the conductors are driven changes at every symbol. Multiple bits are encoded into each symbol epoch. There is no additional overhead for line coding. Clock timing is encoded into each symbol. This is accomplished by requiring that the combination of voltages driven onto the conductors must change at every symbol boundary, which is used for clock recovery. The signal is received using a group of three differential receivers.

The circuit system shown in FIG. 1 is designed to be compliant with the MIPI C-PHY specification. The first, second, and third equalizer circuits are designed to equalize input data signals for transmission to the three driver circuits 105A-105C. The driver circuits 105A, 105B, and 105C are designed to transmit the equalized data signals received from the equalizer circuits through transmission lines 106A, 106B, and 106C, respectively, to inputs of receiver circuits 108A, 108B, and 108C. The equalizer circuits of FIG. 1 cancel the data dependent time jitter (TDDJ) in the output data signals DOA, DOB, and DOC of driver circuits 105A, 105B, and 105C, respectively. Three single-ended driver circuits 105A-105C per lane output three-level voltage amplitudes (e.g., 3/4 volts, 1/2 volts and 1/4 volts) according to three-level signaling.

Serializer circuit 101A provides input data DINA as even and odd data signals EOA and as serialized data signals DSA0 and DSA1 in response to a clock signal CLKPI. Delay control logic circuit 102A generates select signals SELA based on the even and odd data signals EOA. Look-up table circuit 103A generates delay control code TCODEA based on the select signals SELA. Rise/fall delay circuit 104A delays the serialized data signals DSA0 and DSA1 to generate delayed data signals DRA1 and DRAO based on delay control code TCODEA. Driver circuit 105A drives the data indicated by the delayed data signals DRA1 and DRAO as a three-valued data signal DOA through transmission line 106A to inputs of receiver circuits 108A and 108C.

Serializer circuit 101B provides input data DINB as even and odd data signals EOB and as serialized data signals DSB0 and DSB1 in response to clock signal CLKPI. Delay control logic circuit 102B generates select signals SELB based on the even and odd data signals EOB. Look-up table circuit 103B generates delay control code TCODEB based on the select signals SELB. Rise/fall delay circuit 104B delays the serialized data signals DSB0 and DSB1 to generate delayed data signals DRB1 and DRBO based on delay control code TCODEB. Driver circuit 105B drives the data indicated by the delayed data signals DRB1 and DRBO as a three-valued data signal DOB through transmission line 106B to inputs of receiver circuits 108A and 108B.

Serializer circuit 101C provides input data DINC as even and odd data signals EOC and as serialized data signals DSC0 and DSC1 in response to clock signal CLKPI. Delay control logic circuit 102C generates select signals SELC based on the even and odd data signals EOC. Look-up table circuit 103C generates delay control code TCODEC based on the select signals SELC. Rise/fall delay circuit 104C delays the serialized data signals DSC0 and DSC1 to generate delayed data signals DRC1 and DRCO based on delay control code TCODEC. Driver circuit 105C drives the data indicated by the delayed data signals DRC1 and DRCO as a three-valued data signal DOC through transmission line 106C to inputs of receiver circuits 108B and 108C.

Receiver circuit 108A generates an output data signal DA-B based on the difference between data signals DOA and DOB. Receiver circuit 108B generates an output data signal DB-C based on the difference between data signals DOB and DOC. Receiver circuit 108C generates an output data signal DC-A based on the difference between data signals DOA and DOC. Resistors 107A, 107B, and 107C are coupled between the transmission lines 106A, 106B, and 106C, respectively, and capacitor 109. Capacitor 109 is coupled to ground.

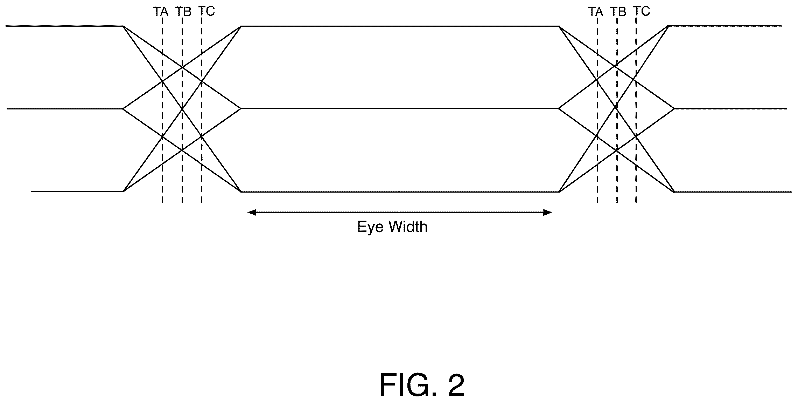

The three-level signaling used in systems that comply with the MIPI C-PHY specification generates three crossing points in the transmitted data signals. Unequal transition voltage levels at the three crossing points cause data dependent time jitter (TDDJ) in the transmitted data signals. Figure 2 is a timing eye diagram that illustrates examples of data signals generated by standard transmitter circuits that transmit data using three-level signaling. The data dependent time jitter generated in the transmitted data also increases the time jitter of the clock signal recovered in the receiver device. Figure 2 shows examples of the transmitter TDDJ, in which the crossing points of the data signals occur at 3 different times TA, TB, and TC. FIG. 2 shows the eye width.

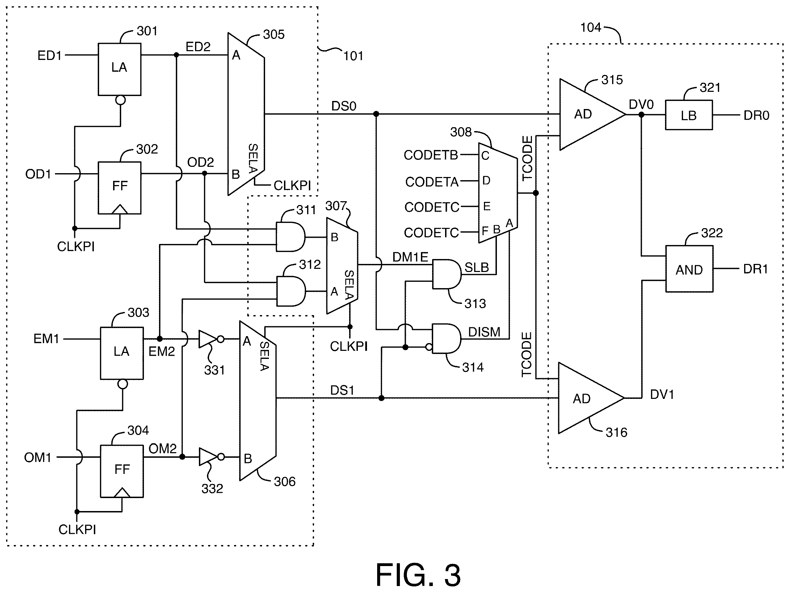

Figure 3 is a diagram that illustrates an example of an equalizer circuit in a transmitter circuit that transmits data using three-level signaling. The equalizer circuit of FIG. 3 includes a serializer circuit 101, a delay controller circuit, a multiplexer circuit 308, and a rise/fall delay circuit 104. The serializer circuit 101 (e.g., each of serializer circuits 101A-101C of FIG. 1) includes latch (LA) circuits 301 and 303, flip-flop (FF) circuits 302 and 304, multiplexer circuits 305-306, and inverter circuit 331-332. The delay controller circuit of FIG. 3 (e.g., each of delay control logic circuits 102A-102C and LUT circuits 103A-103C of FIG. 1) includes multiplexer circuit 307, the AND logic gate circuits 311, 312, 313, and 314, and multiplexer circuit 308.

Multiplexer circuit 308 is part of a lookup table (LUT) circuit (e.g., one of LUT circuits 103A-103C of FIG. 1) that includes memory circuits (not shown). The memory circuits store bits. The bits stored in the memory circuits are output as codes CODETA, CODETB, and CODETC to data inputs of multiplexer circuit 308. Rise/fall delay circuit 104 (e.g., one of rise/fall delay circuits 104A-104C of FIG. 1) includes adjustable delay (AD) circuits 315-316, logic buffer (LB) circuit 321, and an AND logic gate circuit 322.

Four data signals ED1, OD1, EM1, and OM1 indicating data bits are provided in parallel to inputs of the serializer circuit 101 of FIG. 3. The data signal ED1 indicates even data bits that are to be driven at a high level voltage or at a low level voltage. The data signal OD1 indicates odd data bits that are to be driven at a high level voltage or at a low level voltage. The data signal EM1 indicates even data bits that are to be driven at a mid-level voltage that is in between the high level voltage and the low level voltage. The data signal OM1 indicates odd data bits that are to be driven at the mid-level voltage.

The data signals ED1, OD1, EM1, and OM1 are provided to data inputs of the latch circuit 301, the flip-flop circuit 302, the latch circuit 303, and the flip-flop circuit 304, respectively. The clock signal CLKPI is provided to the clock bar inputs of the latch circuits 301 and 303 and to the clock inputs of the flip-flop circuits 302 and 304. In response to each falling edge in clock signal CLKPI, the latch circuit 301 stores the current even bit indicated by signal ED1 at its output in signal ED2, and the latch circuit 303 stores the current even bit indicated by signal EM1 at its output in signal EM2. In response to each rising edge in clock signal CLKPI, the flip-flop circuit 302 stores the current odd bit indicated by signal OD1 at its output in signal OD2, and the flip-flop circuit 304 stores the current odd bit indicated by signal OM1 at its output in signal OM2.

Signal ED2 is provided to a first data input A of multiplexer circuit 305 and to a first input of AND logic gate circuit 311. Signal OD2 is provided to a second data input B of multiplexer circuit 305 and to a first input of AND logic gate circuit 312. Signal EM2 is provided to the input of inverter circuit 331 and to a second input of AND logic gate circuit 311. Signal OM2 is provided to the input of inverter circuit 332 and to a second input of AND logic gate circuit 312. Inverter circuit 331 inverts the even bits indicated by signal EM2 to generate inverted even bits at a first data input A of multiplexer circuit 306. Inverter circuit 332 inverts the odd bits indicated by signal OM2 to generate inverted odd bits at a second data input B of multiplexer circuit 306.

The clock signal CLKPI is also provided to the select inputs SELA of the multiplexer circuits 305-306. Multiplexer circuit 305 serializes the even and odd bits indicated by signals ED2 and OD2 to generate a serialized output data signal DS0. Multiplexer circuit 305 provides the even bits indicated by signal ED2 to signal DS0 when clock signal CLKPI is in a first logic state (e.g., a logic 1), and multiplexer circuit 305 provides the odd bits indicated by signal OD2 to signal DS0 when clock signal CLKPI is in a second logic state (e.g., a logic 0). Thus, multiplexer circuit 305 interleaves the even and odd bits indicated by signals ED2 and OD2 to generate interleaved even and odd bits in signal DS0. Signal DS0 is provided to an input of adjustable delay circuit 315 and to a first input of AND logic gate circuit 314.

Multiplexer circuit 306 serializes the inverted even and odd bits generated by inverter circuits 331-332 to generate a serialized output data signal DS1. Multiplexer circuit 306 provides the inverted even bits generated by inverter circuit 331 to signal DS1 when clock signal CLKPI is in the first logic state (e.g., a logic 1), and multiplexer circuit 306 provides the inverted odd bits generated by inverter circuit 332 to signal DS1 when clock signal CLKPI is in the second logic state (e.g., a logic 0). Multiplexer circuit 306 interleaves the inverted even and odd bits generated by inverter circuits 331-332 to generate interleaved even and odd bits in signal DS1. Thus, multiplexer circuits 305 and 306 provide the even bits from signal ED2 to signal DS0 and the inverted even bits generated by inverter circuit 331 to signal DS1 in response to clock signal CLKPI being in the first logic state. Multiplexer circuits 305 and 306 provide the odd bits from signal OD2 to signal DS0 and the inverted odd bits generated by inverter circuit 332 to signal DS1 in response to clock signal CLKPI being in the second logic state. Signal DS1 is provided to an input of adjustable delay circuit 316, to a second inverting input of AND logic gate circuit 314, and to a first input of AND logic gate circuit 313.

In response to both of signals ED2 and EM2 being at voltages in logic high states (i.e., indicating 1 bits), AND logic gate circuit 311 generates a voltage indicating a logic high state at the B data input of multiplexer circuit 307. If either of signals ED2 or EM2 are at a voltage indicating a logic low state (i.e., indicating a 0 bit), then AND logic gate circuit 311 generates a voltage indicating a logic low state at the B data input of multiplexer circuit 307. In response to both of signals OD2 and OM2 being at voltages in logic high states (i.e., indicating 1 bits), AND logic gate circuit 312 generates a voltage indicating a logic high state at the A data input of multiplexer circuit 307. If either of signals OD2 or OM2 are at a voltage indicating a logic low state (i.e., indicating a 0 bit), then AND logic gate circuit 312 generates a voltage indicating a logic low state at the A data input of multiplexer circuit 307.

The clock signal CLKPI is provided to the select input SELA of multiplexer circuit 307. Multiplexer circuit 307 provides the logic state indicated by the output signal of AND logic gate circuit 311 (indicating the even bits) at its B input to a second input of AND logic gate circuit 313 as signal DM1E in response to clock signal CLKPI being in the second logic state (e.g., a logic 0). Multiplexer circuit 307 provides the logic state indicated by the output signal of AND logic gate circuit 312 (indicating the odd bits) at its A input to the second input of AND logic gate circuit 313 as signal DM1E in response to clock signal CLKPI being in the first logic state (e.g., a logic 1). Signal DM1E is in a logic high state when the next data bit is to be driven at the mid-level voltage between the high level voltage and the low level voltage. Thus, signal DM1E indicates when the next data bit is to be driven at the mid-level voltage one unit interval early.

AND logic gate circuit 313 generates a voltage indicating a logic high state in signal SLB at the B select input of multiplexer circuit 308 in response to both of signals DS1 and DM1E being in logic high states. Thus, a voltage indicating a logic high state in signal SLB indicates that the next data bit is to be driven to the mid-level voltage. AND logic gate circuit 313 generates a voltage indicating a logic low state in signal SLB in response to either of signals DM1E or DS1 being in logic low states.

AND logic gate circuit 314 generates a voltage indicating a logic high state in signal DISM at the A select input of multiplexer circuit 308 in response to signal DS1 having a voltage indicating a logic low state and signal DS0 having a voltage indicating a logic high state. Otherwise, logic gate circuit 314 generates a voltage indicating a logic low state in signal DISM at the A select input of multiplexer circuit 308. The truth table for AND logic gate circuit 314 is shown below in Table 1.

**Table 1**

| DS0 | DS1 | DISM |
|---|---|---|
| 0 | 0 | 0 |
| 0 | 1 | 0 |
| 1 | 0 | 1 |
| 1 | 1 | 0 |

Multiplexer circuit 308 receives three codes CODETA, CODETB, and CODETC at four data inputs. Codes CODETA, CODETB, and CODETC are stored in memory circuits as bits. Each of the codes CODETA, CODETB, and CODETC can include any number of 2 or more bits (e.g., 5 bits). Code CODETB is provided to the C data input of multiplexer circuit 308. Code CODETA is provided to the D data input of multiplexer circuit 308. Code CODETC is provided to the E data input and to the F data input of multiplexer circuit 308. Multiplexer circuit 308 provides the logic states of one of the three codes CODETA, CODETB, or CODETC to its output as multi-bit signals TCODE based on the logic states of the two select signals SLB and DISM received at the B and A select inputs of multiplexer circuit 308. The truth table for multiplexer circuit 308 is shown below in Table 2.

**Table 2**

| SLB (B select input) | DISM (A select input) | TCODE |
|---|---|---|
| 0 | 0 | CODETB |
| 0 | 1 | CODETA |
| 1 | 0 | CODETC |
| 1 | 1 | CODETC |

The output signals TCODE of multiplexer circuit 308 are provided to the control inputs of each of the adjustable delay circuits 315 and 316. The adjustable delay circuit 315 generates an output data signal DV0 that is a delayed version of data signal DS0. Thus, adjustable delay circuit 315 adds a delay to the data bits received in data signal DS0 to generate delayed data bits in its output data signal DV0. Adjustable delay circuit 315 varies the delays added to the data bits generated in its output data signal DV0 relative to the data bits in signal DS0 based on the values of the output signals TCODE of multiplexer circuit 308.

The adjustable delay circuit 316 generates an output data signal DV1 that is a delayed version of data signal DS1. Thus, adjustable delay circuit 316 adds a delay to each of the data bits received in data signal DS1 to generate delayed data bits in its output data signal DV1. Adjustable delay circuit 316 varies the delays added to the data bits generated in its data output signal DV1 relative to the data bits in signal DS1 based on the values of the output signals TCODE of multiplexer circuit 308.

The output data signal DV0 of adjustable delay circuit 315 is provided to the input of logic buffer circuit 321. Logic buffer circuit 321 generates an output data signal DR0 by buffering the data bits indicated by data signal DV0 to generate the data bits in data signal DR0.

Data signal DV0 and the output data signal DV1 of adjustable delay circuit 316 are provided to inputs of AND logic gate circuit 322. AND logic gate circuit 322 performs an AND Boolean logic function on the logic states of data signals DV0 and DV1 to generate the data bits in an output data signal DR1. Data signals DR0 and DR1 are provided to inputs of a driver circuit, such as one of driver circuits 105A-105C as data signals DRAO and DRA1, DRBO and DRB1, or DRCO and DRC1, respectively, for transmission to receiver circuits.

The equalizer circuit of FIG. 3 functions as a cancellation logic circuit that cancels out the data dependent time jitter (TDDJ) in the data signals by dynamically selecting between the three different variable delay codes CODETA, CODETB, and CODETC based on the three voltage levels in the data bits to reduce the delay variation between TA and TC shown in FIG. 2. The variable delay codes CODETA, CODETB, and CODETC are used to select the delays that the adjustable delay circuits 315 and 316 provide to data signals DV0 and DV1, respectively.

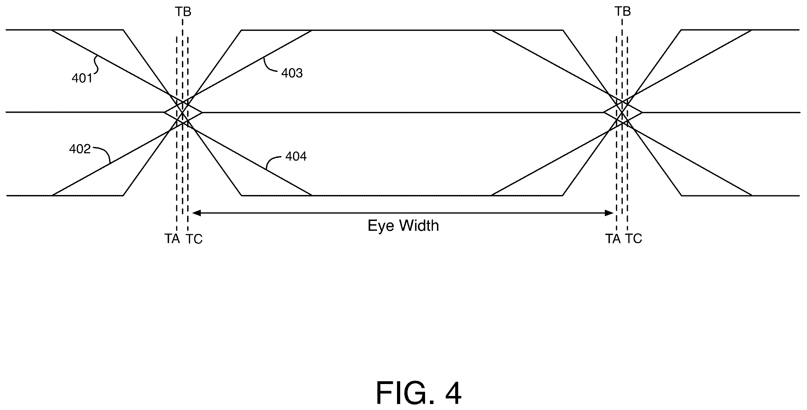

Figure 4 is a timing eye diagram that illustrates examples of data signals generated by the transmitter circuit of FIG. 1 having three of the equalizer circuits shown in FIG. 3. When the transmitter circuit of FIG. 1 is currently transmitting a data bit driven at a mid-level voltage as the current output bit, and the next data bit provided by the equalizer circuit of FIG. 3 for transmission by the transmitter circuit of FIG. 1 in the next unit interval (UI) is a data bit at a high or low level voltage, AND logic gate circuit 313 causes the select signal SLB to be 0 based on signals DS1 and DM1E both being 0, and the AND logic gate circuit 314 causes select signal DISM to be 1 based on signal DS0 being 1 and signal DS1 being 0. Based on select signal DISM being 1 and select signal SLB being 0, multiplexer circuit 308 selects CODETA from its D input and provides the values of CODETA to each of the adjustable delay circuits 315-316 in signals TCODE.

The adjustable delay circuits 315-316 provide the largest variable delay for the next data bit based on receiving the values of CODETA in signals TCODE by delaying signals DV0 and DV1 relative to signals DS0 and DS1, respectively, by the largest variable delay. The LB circuit 321 and AND logic gate circuit 322 then provide the next data bit having the largest variable delay to the driver circuit (e.g., one of driver circuits 105A-105C) in signals DR0 and DR1 based on signals DV0 and DV1. Based on receiving the delayed next data bit having the largest variable delay in signals DR0 and DR1, the driver circuit in the transmitter circuit of FIG. 1 delays (i.e., pushes out) the transition in the data output signal from the mid-level voltage to the high or low level voltage in the next UI by the largest variable delay to cause time TA to occur closer to time TB, as shown for example, by transitions 403-404 in Figure 4.

When the transmitter circuit of FIG. 1 is currently transmitting a data bit driven at a high or low level voltage as the current output bit, and the next data bit provided by the equalizer circuit of FIG. 3 for transmission by the transmitter circuit of FIG. 1 in the next UI is a data bit at a mid-level voltage, AND logic gate circuit 313 causes the select signal SLB to be 1 based on signal DM1E being 1 and signal DS1 being 1. Also, AND logic gate circuit 314 causes signal DISM to be 0 based on signal DS1 being 1. Based on select signal SLB being 1, multiplexer circuit 308 selects CODETC from its E input and provides the values of CODETC to each of the adjustable delay circuits 315-316 in signals TCODE.

The adjustable delay circuits 315-316 provide the smallest variable delay for the next data bit based on receiving the values of CODETC in signals TCODE by delaying signals DV0 and DV1 relative to signals DS0 and DS1, respectively, by the smallest variable delay. The LB circuit 321 and the AND logic gate circuit 322 then provide the next data bit having the smallest variable delay to the driver circuit (e.g., one of driver circuits 105A-105C) in signals DR0 and DR1 based on signals DV0 and DV1. Based on receiving the delayed next data bit having the smallest variable delay in signals DR0 and DR1, the driver circuit in the transmitter circuit delays (i.e., pulls in) the transition in the data output signal from the high or low level voltage to the mid-level voltage in the next UI by the smallest variable delay to cause time TC to occur closer to time TB, as shown for example, by transitions 401-402 in Figure 4.

For all other logic transitions in the data output signals of the transmitter circuit of FIG. 1 (e.g., the transmitter circuit of FIG. 1 is transmitting between high and low level voltages across unit intervals), the select signal SLB and select signal DISM are both 0, because signal DS1 is 1 and signal DM1E is 0. Based on both of the select signals SLB and DISM being 0, multiplexer circuit 308 selects CODETB (e.g., the default values) from its C input and provides the values of CODETB to each of the adjustable delay circuits 315-316 in signals TCODE.

The adjustable delay circuits 315-316 provide a third variable delay for the next data bit based on receiving the values of CODETB in signals TCODE by delaying signals DV0 and DV1 relative to signals DS0 and DS1, respectively, by the third variable delay. The third variable delay can be, for example, a value that is between the largest variable delay and the smallest variable delay. The LB circuit 321 and the AND logic gate circuit 322 then provide the next data bit having the third variable delay to the driver circuit (e.g., one of driver circuits 105A-105C) in signals DR0 and DR1 based on signals DV0 and DV1. Based on receiving the delayed next data bit having the third variable delay in signals DR0 and DR1, the driver circuit in the transmitter circuit delays the transition in the data output signal between Uls by the third variable delay to cause the midpoint transition in the output data signal at time TB. As a result, the variations between the times TA, TB, and TC are significantly reduced as shown in FIG. 4 compared to FIG. 2.

The values of the smallest, the largest, and the third variable delays indicated by codes CODETB, CODETA, and CODETC can, as an example, be trained through a firmware training algorithm. The transmitter circuit of FIG. 1 having the equalizer circuits of FIG. 3 can reduce the data dependent time jitter (TDDJ) of the transmitted data signal substantially (e.g., to one-quarter of the TDDJ in previously known systems). The equalizer circuit of FIG. 3 also eliminates deterministic time jitter of the recovered clock signal in the receiver circuits 108A-108C, while increasing the transmit data eye width (e.g., from 0.75 UI to 0.85 UI).

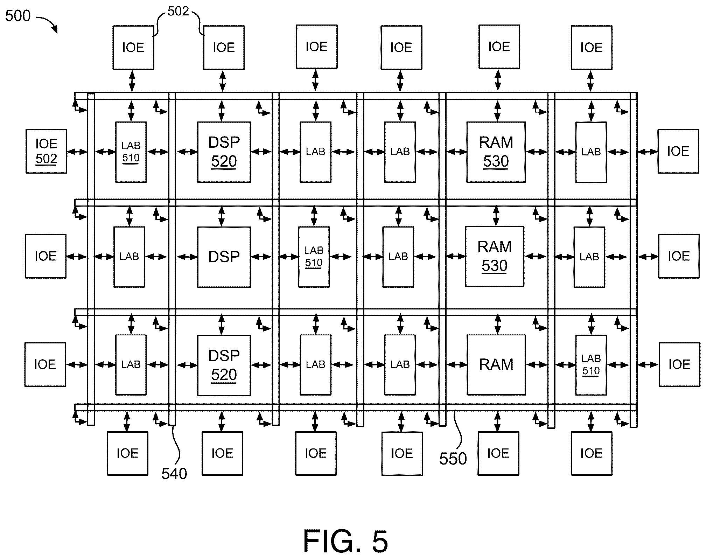

Figure 5 illustrates an example of a configurable logic integrated circuit (IC) 500 that can include, for example, the circuits disclosed herein with respect to FIGS. 1 and 3. As shown in FIG. 5, the configurable logic integrated circuit (IC) 500 includes a two-dimensional array of configurable functional circuit blocks, including configurable logic array blocks (LABs) 510 and other functional circuit blocks, such as random access memory (RAM) blocks 530 and digital signal processing (DSP) blocks 520. Functional blocks such as LABs 510 can include smaller programmable logic circuits (e.g., logic elements, logic blocks, or adaptive logic modules) that receive input signals and perform custom functions on the input signals to produce output signals.

In addition, programmable logic IC 500 can have input/output elements (IOEs) 502 for driving signals off of programmable logic IC 500 and for receiving signals from other devices. Input/output elements 502 can include parallel input/output circuitry, serial data transceiver circuitry, differential receiver and transmitter circuitry, or other circuitry used to connect one integrated circuit to another integrated circuit. As shown, input/output elements 502 can be located around the periphery of the chip. If desired, the programmable logic IC 500 can have input/output elements 502 arranged in different ways. For example, input/output elements 502 can form one or more columns, rows, or islands of input/output elements that may be located anywhere on the programmable logic IC 500. One or more of the IOEs 502 can include the transmitter circuit of FIG. 1 having three of the equalizer circuits of FIG. 3.

The programmable logic IC 500 can also include programmable interconnect circuitry in the form of vertical routing channels 540 (i.e., interconnects formed along a vertical axis of programmable logic IC 500) and horizontal routing channels 550 (i.e., interconnects formed along a horizontal axis of programmable logic IC 500), each routing channel including at least one conductor to route at least one signal.

Note that other routing topologies, besides the topology of the interconnect circuitry depicted in FIG. 5, may be used. For example, the routing topology can include wires that travel diagonally or that travel horizontally and vertically along different parts of their extent as well as wires that are perpendicular to the device plane in the case of three dimensional integrated circuits. The driver of a wire can be located at a different point than one end of a wire.

Furthermore, it should be understood that embodiments disclosed herein with respect to FIGS. 1-4 can be implemented in any integrated circuit or electronic system. If desired, the functional blocks of such an integrated circuit can be arranged in more levels or layers in which multiple functional blocks are interconnected to form still larger blocks. Other device arrangements can use functional blocks that are not arranged in rows and columns.

Programmable logic IC 500 can contain programmable memory elements. Memory elements can be loaded with configuration data using input/output elements (IOEs) 502. Once loaded, the memory elements each provide a corresponding static control signal that controls the operation of an associated configurable functional block (e.g., LABs 510, DSP blocks 520, RAM blocks 530, or input/output elements 502).

In a typical scenario, the outputs of the loaded memory elements are applied to the gates of metal-oxide-semiconductor field-effect transistors (MOSFETs) in a functional block to turn certain transistors on or off and thereby configure the logic in the functional block including the routing paths. Programmable logic circuit elements that can be controlled in this way include multiplexers (e.g., multiplexers used for forming routing paths in interconnect circuits), look-up tables, logic arrays, AND, OR, XOR, NAND, and NOR logic gates, pass gates, etc.

The programmable memory elements can be organized in a configuration memory array having rows and columns. A data register that spans across all columns and an address register that spans across all rows can receive configuration data. The configuration data can be shifted onto the data register. When the appropriate address register is asserted, the data register writes the configuration data to the configuration memory bits of the row that was designated by the address register.

In certain embodiments, programmable logic IC 500 can include configuration memory that is organized in sectors, whereby a sector can include the configuration RAM bits that specify the functions and/or interconnections of the subcomponents and wires in or crossing that sector. Each sector can include separate data and address registers.

The configurable logic IC of FIG. 5 is merely one example of an IC that can be used with embodiments disclosed herein. The embodiments disclosed herein can be used with any suitable integrated circuit or system. For example, the embodiments disclosed herein can be used with numerous types of devices such as processor integrated circuits, central processing units, memory integrated circuits, graphics processing unit integrated circuits, application specific standard products (ASSPs), application specific integrated circuits (ASICs), and programmable logic integrated circuits. Examples of programmable logic integrated circuits include programmable arrays logic (PALs), programmable logic arrays (PLAs), field programmable logic arrays (FPLAs), electrically programmable logic devices (EPLDs), electrically erasable programmable logic devices (EEPLDs), logic cell arrays (LCAs), complex programmable logic devices (CPLDs), and field programmable gate arrays (FPGAs), just to name a few.

The integrated circuits disclosed in one or more embodiments herein can be part of a data processing system that includes one or more of the following components: a processor; memory; input/output circuitry; and peripheral devices. The data processing system can be used in a wide variety of applications, such as computer networking, data networking, instrumentation, video processing, digital signal processing, or any suitable other application. The integrated circuits can be used to perform a variety of different logic functions.

In general, software and data for performing any of the functions disclosed herein can be stored in non-transitory computer readable storage media. Non-transitory computer readable storage media is tangible computer readable storage media that stores data and software for access at a later time, as opposed to media that only transmits propagating electrical signals (e.g., wires). The software code may sometimes be referred to as software, data, program instructions, instructions, or code. The non-transitory computer readable storage media can, for example, include computer memory chips, non-volatile memory such as non-volatile random-access memory (NVRAM), one or more hard drives (e.g., magnetic drives or solid state drives), one or more removable flash drives or other removable media, compact discs (CDs), digital versatile discs (DVDs), Blu-ray discs (BDs), other optical media, and floppy diskettes, tapes, or any other suitable memory or storage device(s).

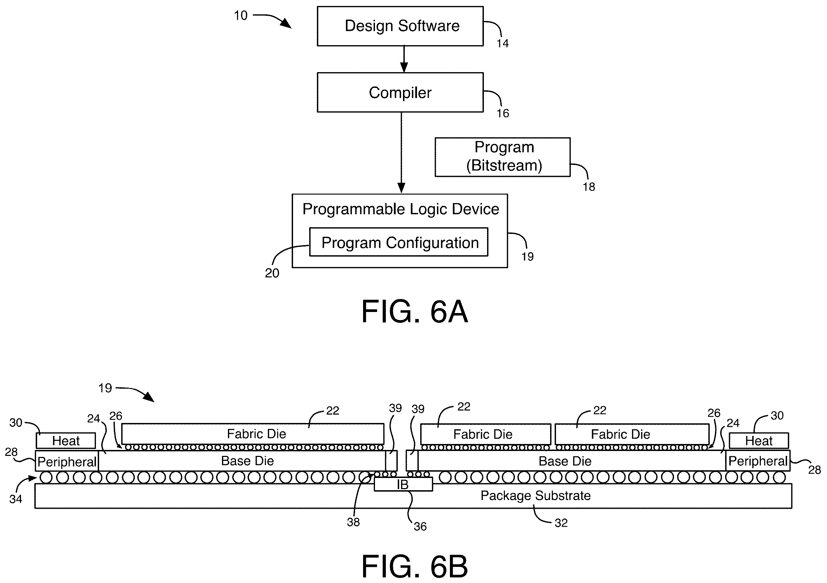

Figure 6A illustrates a block diagram of a system 10 that can be used to implement a circuit design to be programmed into a programmable logic device 19 using design software. A designer can implement circuit design functionality on an integrated circuit, such as a reconfigurable programmable logic device 19 (e.g., a field programmable gate array (FPGA)). The designer can implement the circuit design to be programmed onto the programmable logic device 19 using design software 14. The design software 14 can use a compiler 16 to generate a low-level circuit-design program (bitstream) 18, sometimes known as a program object file and/or configuration program, that programs the programmable logic device 19. Thus, the compiler 16 can provide machine-readable instructions representative of the circuit design to the programmable logic device 19. For example, the programmable logic device 19 can receive one or more programs (bitstreams) 18 that describe the hardware implementations that should be stored in the programmable logic device 19. A program (bitstream) 18 can be programmed into the programmable logic device 19 as a configuration program 20. The configuration program 20 can, in some cases, represent an accelerator function to perform for machine learning, video processing, voice recognition, image recognition, or other highly specialized task.

In some implementations, a programmable logic device can be any integrated circuit device that includes a programmable logic device with two separate integrated circuit die where at least some of the programmable logic fabric is separated from at least some of the fabric support circuitry that operates the programmable logic fabric. One example of such a programmable logic device is shown in FIG. 6B, but many others can be used, and it should be understood that this disclosure is intended to encompass any suitable programmable logic device where programmable logic fabric and fabric support circuitry are at least partially separated on different integrated circuit die.

Figure 6B is a diagram that depicts an example of the programmable logic device 19 that includes three fabric die 22 and two base die 24 that are connected to one another via microbumps 26. In the example of FIG. 6B, at least some of the programmable logic fabric of the programmable logic device 19 is in the three fabric die 22, and at least some of the fabric support circuitry that operates the programmable logic fabric is in the two base die 24. For example, some of the circuitry of configurable IC 500 shown in FIG. 5 (e.g., LABs 510, DSP 520, and RAM 530) can be located in the fabric die 22 and some of the circuitry of IC 500 (e.g., input/output elements 502) can be located in the base die 24.

Although the fabric die 22 and base die 24 appear in a one-to-one relationship or a two-to-one relationship in FIG. 6B, other relationships can be used. For example, a single base die 24 can attach to several fabric die 22, or several base die 24 can attach to a single fabric die 22, or several base die 24 can attach to several fabric die 22 (e.g., in an interleaved pattern). Peripheral circuitry 28 can be attached to, embedded within, and/or disposed on top of the base die 24, and heat spreaders 30 can be used to reduce an accumulation of heat on the programmable logic device 19. The heat spreaders 30 can appear above, as pictured, and/or below the package (e.g., as a double-sided heat sink). The base die 24 can attach to a package substrate 32 via conductive bumps 34. In the example of FIG. 6B, two pairs of fabric die 22 and base die 24 are shown communicatively connected to one another via an interconnect bridge 36 (e.g., an embedded multi-die interconnect bridge (EMIB)) and microbumps 38 at bridge interfaces 39 in base die 24.

In combination, the fabric die 22 and the base die 24 can operate in combination as a programmable logic device 19 such as a field programmable gate array (FPGA). It should be understood that an FPGA can, for example, represent the type of circuitry, and/or a logical arrangement, of a programmable logic device when both the fabric die 22 and the base die 24 operate in combination. Moreover, an FPGA is discussed herein for the purposes of this example, though it should be understood that any suitable type of programmable logic device can be used.

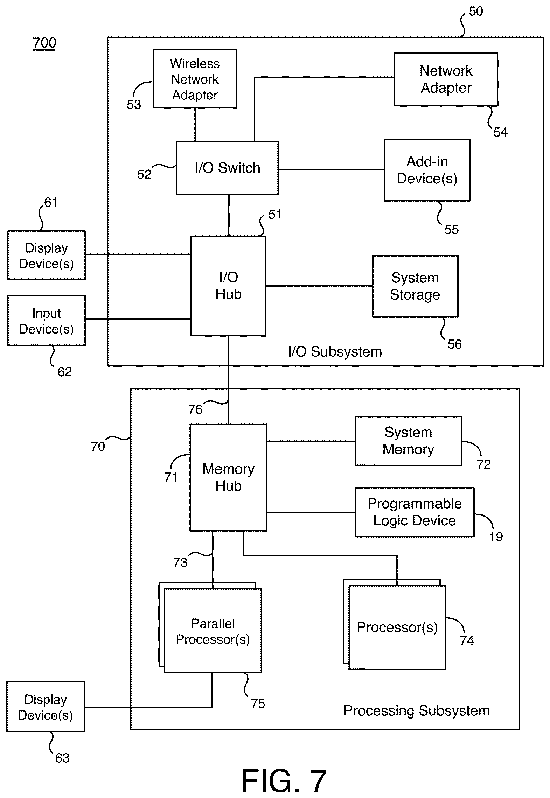

Figure 7 is a block diagram illustrating a computing system 700 configured to implement one or more aspects of the embodiments described herein. The computing system 700 includes a processing subsystem 70 having one or more processor(s) 74, a system memory 72, and a programmable logic device 19 communicating via an interconnection path that can include a memory hub 71. The memory hub 71 can be a separate component within a chipset component or can be integrated within the one or more processor(s) 74. The memory hub 71 couples with an input/output (I/O) subsystem 50 via a communication link 76. The I/O subsystem 50 includes an input/output (I/O) hub 51 that can enable the computing system 700 to receive input from one or more input device(s) 62. Additionally, the I/O hub 51 can enable a display controller, which can be included in the one or more processor(s) 74, to provide outputs to one or more display device(s) 61. In one embodiment, the one or more display device(s) 61 coupled with the I/O hub 51 can include a local, internal, or embedded display device.

In one embodiment, the processing subsystem 70 includes one or more parallel processor(s) 75 coupled to memory hub 71 via a bus or other communication link 73. The communication link 73 can use one of any number of standards based communication link technologies or protocols, such as, but not limited to, PCI Express, or can be a vendor specific communications interface or communications fabric. In one embodiment, the one or more parallel processor(s) 75 form a computationally focused parallel or vector processing system that can include a large number of processing cores and/or processing clusters, such as a many integrated core (MIC) processor. In one embodiment, the one or more parallel processor(s) 75 form a graphics processing subsystem that can output pixels to one of the one or more display device(s) 61 coupled via the I/O Hub 51. The one or more parallel processor(s) 75 can also include a display controller and display interface (not shown) to enable a direct connection to one or more display device(s) 63.

Within the I/O subsystem 50, a system storage unit 56 can connect to the I/O hub 51 to provide a storage mechanism for the computing system 700. An I/O switch 52 can be used to provide an interface mechanism to enable connections between the I/O hub 51 and other components, such as a network adapter 54 and/or a wireless network adapter 53 that can be integrated into the platform, and various other devices that can be added via one or more add-in device(s) 55. The network adapter 54 can be an Ethernet adapter or another wired network adapter. The wireless network adapter 53 can include one or more of a Wi-Fi, Bluetooth, near field communication (NFC), or other network device that includes one or more wireless radios.

The computing system 700 can include other components not shown in FIG. 7, including other port connections, optical storage drives, video capture devices, and the like, that can also be connected to the I/O hub 51. Communication paths interconnecting the various components in FIG. 7 can be implemented using any suitable protocols, such as PCI (Peripheral Component Interconnect) based protocols (e.g., PCI-Express), or any other bus or point-to-point communication interfaces and/or protocol(s), such as the NV-Link high-speed interconnect, or interconnect protocols known in the art.

In one embodiment, the one or more parallel processor(s) 75 incorporate circuitry optimized for graphics and video processing, including, for example, video output circuitry, and constitutes a graphics processing unit (GPU). In another embodiment, the one or more parallel processor(s) 75 incorporate circuitry optimized for general purpose processing, while preserving the underlying computational architecture. In yet another embodiment, components of the computing system 700 can be integrated with one or more other system elements on a single integrated circuit. For example, the one or more parallel processor(s) 75, memory hub 71, processor(s) 74, and I/O hub 51 can be integrated into a system on chip (SoC) integrated circuit. Alternatively, the components of the computing system 700 can be integrated into a single package to form a system in package (SIP) configuration. In one embodiment, at least a portion of the components of the computing system 700 can be integrated into a multi-chip module (MCM), which can be interconnected with other multi-chip modules into a modular computing system.

The computing system 700 shown herein is illustrative. Other variations and modifications are also possible. The connection topology, including the number and arrangement of bridges, the number of processor(s) 74, and the number of parallel processor(s) 75, can be modified as desired. For instance, in some embodiments, system memory 72 is connected to the processor(s) 74 directly rather than through a bridge, while other devices communicate with system memory 72 via the memory hub 71 and the processor(s) 74. In other alternative topologies, the parallel processor(s) 75 are connected to the I/O hub 51 or directly to one of the one or more processor(s) 74, rather than to the memory hub 71. In other embodiments, the I/O hub 51 and memory hub 71 can be integrated into a single chip. Some embodiments can include two or more sets of processor(s) 74 attached via multiple sockets, which can couple with two or more instances of the parallel processor(s) 75.

Some of the particular components shown herein are optional and may not be included in all implementations of the computing system 700. For example, any number of add-in cards or peripherals can be supported, or some components can be eliminated. Furthermore, some architectures can use different terminology for components similar to those illustrated in FIG. 7. For example, the memory hub 71 can be referred to as a Northbridge in some architectures, while the I/O hub 51 can be referred to as a Southbridge.

Additional examples are disclosed herein. Example 1 is an integrated circuit comprising: a delay controller circuit that generates delay signals based on a current data bit; a first adjustable delay circuit that delays the current data bit; and a driver circuit that drives the current data bit outside the integrated circuit, wherein the driver circuit transitions the current data bit at a first voltage to a second voltage over a first delay provided by the first adjustable delay circuit based on the delay signals, wherein the driver circuit transitions the current data bit at the second voltage to a third voltage over a second delay provided by the first adjustable delay circuit based on the delay signals, wherein the second voltage is less than the first voltage, and wherein the second voltage is greater than the third voltage.

In Example 2, the integrated circuit of Example 1, wherein the driver circuit transitions the current data bit between the first voltage and the third voltage over a third delay provided by the first adjustable delay circuit based on the delay signals.

In Example 3, the integrated circuit of any one of Examples 1-2 further comprises: a serializer circuit comprising a latch circuit that stores even bits, a flip-flop circuit that stores odd bits, and a multiplexer circuit that provides stored bits from the latch circuit and the flip-flop circuit to the first adjustable delay circuit in response to a clock signal.

In Example 4, the integrated circuit of any one of Examples 1-3 may optionally include, wherein the second delay is greater than the first delay.

In Example 5, the integrated circuit of any one of Examples 1-4 may optionally include, wherein the delay controller circuit comprises a multiplexer circuit that causes the delay signals to have first values that cause the first adjustable delay circuit to provide the first delay to the current data bit based on a first indication that a next data bit is to be driven at the second voltage.

In Example 6, the integrated circuit of Example 5 may optionally include, wherein the multiplexer circuit causes the delay signals to have second values that cause the first adjustable delay circuit to provide the second delay to the current data bit based on a second indication that the next data bit is to be driven at the third voltage.

In Example 7, the integrated circuit of any one of Examples 5-6 may optionally include, wherein the delay controller circuit further comprises delay control logic circuitry that provides a first select signal to a first select input of the multiplexer circuit that indicates when the next data bit is to be driven at the second voltage, and wherein the delay control logic circuitry provides a second select signal to a second select input of the multiplexer circuit that indicates when the current data bit is driven by the driver circuit at the second voltage.

In Example 8, the integrated circuit of any one of Examples 1-7 may optionally include, wherein the driver circuit transitions the current data bit at the third voltage to the second voltage over the first delay provided by the first adjustable delay circuit based on the delay signals, and wherein the driver circuit transitions the current data bit at the second voltage to the first voltage over the second delay provided by the first adjustable delay circuit based on the delay signals.

In Example 9, the integrated circuit of any one of Examples 1-8 further comprises: a second adjustable delay circuit that delays the current data bit, wherein the driver circuit transitions the current data bit at the first voltage to the second voltage over the first delay provided by the first and the second adjustable delay circuits based on the delay signals, and wherein the driver circuit transitions the current data bit at the second voltage to the third voltage over the second delay provided by the first and the second adjustable delay circuits based on the delay signals.

Example 10 is a method for increasing an eye width of a transmitted data signal, the method comprising: providing a first delay to a current bit based on a first value using an adjustable delay circuit; driving the current bit from a first voltage to a second voltage in the transmitted data signal during the first delay using a driver circuit; providing a second delay to the current bit based on a second value using the adjustable delay circuit; and driving the current bit from the second voltage to a third voltage in the transmitted data signal during the second delay using the driver circuit, wherein the second voltage is between the first voltage and the third voltage.

In Example 11, the method of Example 10 further comprises: generating the first value based on the current bit being driven at the first voltage and based on a next bit to be driven at the second voltage using a delay controller circuit; and generating the second value based on the current bit being driven at the second voltage and based on the next bit to be driven at the third voltage using the delay controller circuit.

In Example 12, the method of any one of Examples 10-11 further comprises: storing even bits in a latch circuit; storing odd bits in a flip-flop circuit; and providing stored bits from the latch circuit and the flip-flop circuit to the adjustable delay circuit through a multiplexer circuit in response to a clock signal.

In Example 13, the method of any one of Examples 10-12 further comprises: driving the current bit from the third voltage to the second voltage during the first delay using the driver circuit; and driving the current bit from the second voltage to the first voltage during the second delay using the driver circuit.

In Example 14, the method of any one of Examples 10-13 further comprises: providing a third delay to the current bit based on a third value using the adjustable delay circuit; and driving the current bit between the first voltage and the third voltage in the transmitted data signal during the third delay using the driver circuit.

In Example 15, the method of any one of Examples 10-14 further comprises: providing the first value to the adjustable delay circuit using a multiplexer circuit based on a next bit indicating the second voltage; and providing the second value to the adjustable delay circuit using the multiplexer circuit based on the next bit indicating the first voltage or the third voltage.

Example 16 is a transmitter circuit comprises: a delay controller circuit configured to generate a delay code based on a first data bit and based on a second data bit that follows the first data bit in input data; an adjustable delay circuit configured to delay the first data bit based on the delay code to generate a data signal; and a driver circuit that drives the data signal between a first voltage, a second voltage, and a third voltage, wherein the second voltage is between the first voltage and the third voltage.

In Example 17, the transmitter circuit of Example 16 further comprises: a multiplexer circuit that provides even bits from a first storage circuit and odd bits from a second storage circuit to the adjustable delay circuit as the first data bit in response to a clock signal.

In Example 18, the transmitter circuit of any one of Examples 16-17 may optionally include, wherein the delay controller circuit causes the adjustable delay circuit to delay the first data bit by a first amount to generate the data signal based the delay code indicating the first data bit being driven at the first voltage or at the third voltage and the second data bit to be driven at the second voltage.

In Example 19, the transmitter circuit of Example 18 may optionally include, wherein the delay controller circuit causes the adjustable delay circuit to delay the first data bit by a second amount to generate the data signal based on the delay code indicating the first data bit being driven at the second voltage and the second data bit to be driven at the first voltage or at the third voltage.

In Example 20, the transmitter circuit of any one of Examples 16-19 may optionally include, wherein the driver circuit transitions the data signal between two of the first voltage, the second voltage, and the third voltage across each adjacent pair of unit intervals in the data signal over a time period provided to the first data bit by the adjustable delay circuit.

The foregoing description of the exemplary embodiments has been presented for the purpose of illustration. The foregoing description is not intended to be exhaustive or to be limiting to the examples disclosed herein. The foregoing is merely illustrative of the principles of this disclosure and various modifications can be made by those skilled in the art. The foregoing embodiments may be implemented individually or in any combination.

## Claims

1. An integrated circuit comprising:
a delay controller circuit that generates delay signals based on a current data bit;
a first adjustable delay circuit that delays the current data bit; and
a driver circuit that drives the current data bit outside the integrated circuit, wherein the driver circuit transitions the current data bit at a first voltage to a second voltage over a first delay provided by the first adjustable delay circuit based on the delay signals, wherein the driver circuit transitions the current data bit at the second voltage to a third voltage over a second delay provided by the first adjustable delay circuit based on the delay signals, wherein the second voltage is less than the first voltage, and wherein the second voltage is greater than the third voltage.

2. The integrated circuit of claim 1, wherein the driver circuit transitions the current data bit between the first voltage and the third voltage over a third delay provided by the first adjustable delay circuit based on the delay signals.

3. The integrated circuit of claim 1 or 2 further comprising:
a serializer circuit comprising a latch circuit that stores even bits, a flip-flop circuit that stores odd bits, and a multiplexer circuit that provides stored bits from the latch circuit and the flip-flop circuit to the first adjustable delay circuit in response to a clock signal, or wherein the second delay is greater than the first delay.

4. The integrated circuit of one of claims 1 to 3, wherein the delay controller circuit comprises a multiplexer circuit that causes the delay signals to have first values that cause the first adjustable delay circuit to provide the first delay to the current data bit based on a first indication that a next data bit is to be driven at the second voltage.

5. The integrated circuit of claim 4, wherein the multiplexer circuit causes the delay signals to have second values that cause the first adjustable delay circuit to provide the second delay to the current data bit based on a second indication that the next data bit is to be driven at the third voltage, or wherein the delay controller circuit further comprises delay control logic circuitry that provides a first select signal to a first select input of the multiplexer circuit that indicates when the next data bit is to be driven at the second voltage, and wherein the delay control logic circuitry provides a second select signal to a second select input of the multiplexer circuit that indicates when the current data bit is driven by the driver circuit at the second voltage.

6. The integrated circuit of one of claims 1 to 5, wherein the driver circuit transitions the current data bit at the third voltage to the second voltage over the first delay provided by the first adjustable delay circuit based on the delay signals, and wherein the driver circuit transitions the current data bit at the second voltage to the first voltage over the second delay provided by the first adjustable delay circuit based on the delay signals.

7. The integrated circuit of one of claims 1 to 6 further comprising:
a second adjustable delay circuit that delays the current data bit, wherein the driver circuit transitions the current data bit at the first voltage to the second voltage over the first delay provided by the first and the second adjustable delay circuits based on the delay signals, and wherein the driver circuit transitions the current data bit at the second voltage to the third voltage over the second delay provided by the first and the second adjustable delay circuits based on the delay signals.

8. A method for increasing an eye width of a transmitted data signal, the method comprising:
providing a first delay to a current bit based on a first value using an adjustable delay circuit;
driving the current bit from a first voltage to a second voltage in the transmitted data signal during the first delay using a driver circuit;
providing a second delay to the current bit based on a second value using the adjustable delay circuit; and
driving the current bit from the second voltage to a third voltage in the transmitted data signal during the second delay using the driver circuit, wherein the second voltage is between the first voltage and the third voltage.

9. The method of claim 8 further comprising:
generating the first value based on the current bit being driven at the first voltage and based on a next bit to be driven at the second voltage using a delay controller circuit; and
generating the second value based on the current bit being driven at the second voltage and based on the next bit to be driven at the third voltage using the delay controller circuit.

10. The method of claim 8 or 9 further comprising:
storing even bits in a latch circuit;
storing odd bits in a flip-flop circuit; and
providing stored bits from the latch circuit and the flip-flop circuit to the adjustable delay circuit through a multiplexer circuit in response to a clock signal.

11. The method of one of claims 8 to 10 further comprising:
driving the current bit from the third voltage to the second voltage during the first delay using the driver circuit; and
driving the current bit from the second voltage to the first voltage during the second delay using the driver circuit.

12. The method of one of claims 8 to 11 further comprising:
providing a third delay to the current bit based on a third value using the adjustable delay circuit; and
driving the current bit between the first voltage and the third voltage in the transmitted data signal during the third delay using the driver circuit, or further comprising:
providing the first value to the adjustable delay circuit using a multiplexer circuit based on a next bit indicating the second voltage; and
providing the second value to the adjustable delay circuit using the multiplexer circuit based on the next bit indicating the first voltage or the third voltage.

13. A transmitter circuit comprising:
a delay controller circuit configured to generate a delay code based on a first data bit and based on a second data bit that follows the first data bit in input data;
an adjustable delay circuit configured to delay the first data bit based on the delay code to generate a data signal; and
a driver circuit that drives the data signal between a first voltage, a second voltage, and a third voltage, wherein the second voltage is between the first voltage and the third voltage.

14. The transmitter circuit of claim 13 further comprising:
a multiplexer circuit that provides even bits from a first storage circuit and odd bits from a second storage circuit to the adjustable delay circuit as the first data bit in response to a clock signal.

15. The transmitter circuit of claim 13, wherein the delay controller circuit causes the adjustable delay circuit to delay the first data bit by a first amount to generate the data signal based the delay code indicating the first data bit being driven at the first voltage or at the third voltage and the second data bit to be driven at the second voltage, and preferably the delay controller circuit causes the adjustable delay circuit to delay the first data bit by a second amount to generate the data signal based on the delay code indicating the first data bit being driven at the second voltage and the second data bit to be driven at the first voltage or at the third voltage; or
wherein the driver circuit transitions the data signal between two of the first voltage, the second voltage, and the third voltage across each adjacent pair of unit intervals in the data signal over a time period provided to the first data bit by the adjustable delay circuit.
